# EUROPEAN PATENT SPECIFICATION

(11) **EP 3 713 127 B1**
(45) Date of publication and mention of the grant of the patent: **05.01.2022**
(21) Application number: 18878542.2
(22) Date of filing: 08.05.2018
(51) Int. Cl.: H04L 1/22, B61L 27/00

(54) **METHOD AND APPARATUS FOR HOT BACKUP OF MASTER CONTROL UNIT, AND COMPUTER STORAGE MEDIUM**
VERFAHREN UND VORRICHTUNG FÜR EIN HOT-BACKUP EINER HAUPTSTEUEREINHEIT UND COMPUTERSPEICHERMEDIUM
PROCÉDÉ ET APPAREIL DE SAUVEGARDE À CHAUD D'UNITÉ DE COMMANDE MAÎTRE ET SUPPORT DE STOCKAGE INFORMATIQUE

(30) Priority: 14.11.2017 CN 201711120641
(43) Date of publication of application: 23.09.2020
(73) Proprietor: CRSC RESEARCH & DESIGN INSTITUTE GROUP CO., LTD., Fengtai District Beijing 100070 (CN)
(72) Inventor: WANG, Jianmin, Beijing 100070 (CN); JIANG, Ming, Beijing 100070 (CN); MENG, Fanyong, Beijing 100070 (CN); YU, Xiaona, Beijing 100070 (CN); QI, Liwei, Beijing 100070 (CN)
(74) Representative: Huang, Liwei
(86) International application number: PCT/CN2018/086024
(87) International publication number: WO 2019/095647

(56) References cited:
- EP-A1- 0 749 663
- CN-A- 103 802 862
- CN-A- 107 187 465
- JP-B2- 4 966 888
- US-A1- 2003 185 225

## Description

The present application claims priority of the Chinese Patent Application No. 201711120641.0 filed on November 14, 2017.

### TECHNICAL FIELD

The present disclosure relates to the field of train control technology, especially a method of providing a hot standby for a main control unit, and more particularly to a method and apparatus of providing a hot standby for a main control unit, and a computer storage medium.

### BACKGROUND

In recent years, with the advancement of science and technology and the development of social economy, rail transport has been rapidly developed, the running speed of trains has been continuously raised, and the running density has been continuously increased, rail transport has increasingly high demands for the train control system. The train control system, as a safety security basis for rail transport, provides a solid technical guarantee for high-speed passenger service and heavy cargo service of railways, as well as high density service and low interval service of urban rails.

The train control system supervises the running speed of trains in real time, and automatically controls the train braking system according to train operation restriction conditions, thereby achieving train overspeed protection, ensuring train driving safety, and improving train operation efficiency.

At present, the main application forms of the train control system are urban rail train control system, high-speed train control system, heavy-load train control system, and ordinary railway train control system. Among them, the widely used urban rail train control system is mainly a CBTC (wireless communication-based train automatic control system) train control system, the high-speed rail train control system mainly refers to the CTCS (Chinese Train Control System) level 2 and CTCS level 3 train control system, while the heavy-load train control system and the ordinary railway train control system basically adopt the CTCS-0 level system architecture.

The function of the train control system decides that its system architecture must satisfy both high security requirements and high reliability requirements, therefore, existing train control systems generally adopt cold standby train control for a controlled device (e.g., BTM (balise transmission module)). However, when a controlled unit that is operating has a failure, it needs to switch from the fault controlled unit to the standby controlled unit while stopping the train, which affects operation efficiency and is not beneficial to driving safety. Besides, US 20030185225A1 discloses a switch module for a communication network switch comprises first and second switching units.

Therefore, it is urgent for those skilled in the art to develop a method of providing a hot standby for the main control unit, when a failure occurs in the main control unit that is operating, the fault main control unit is switched to the standby main control unit without stopping the train.

### SUMMARY

In view of the above, the present disclosure aims to solve the technical problem of providing a method and apparatus of providing a hot standby for the main control unit, and a computer storage medium, thereby solve the problem that it needs to stop the train to switch to the standby main control unit when a failure occurs in the main control unit, which affects normal operation of the train.

The invention is set out in the appended set of claims.

As known from the above specific embodiments of the present disclosure, the method and apparatus of providing a hot standby for a main control unit and the computer storage medium at least have the following advantageous effects: the second main control unit (standby-system main control board) provides a hot standby for the first main control unit (main-system main control board); the first main control unit (main-system main control board) controls the first controlled unit (main-system controlled unit, such as a BTM unit) to receive information from the ground subsystem, if a failure occurs in at least one module included in the first main control unit (e.g., the processing module, the communication module, the digital output input module, and the power source module, etc.), it switches in entirety from the first main control unit to the second main control unit, that is, the second main control unit controls the first controlled unit to receive information from the ground subsystem; if there is a second controlled unit (standby-system controlled unit, e.g., a BTM unit) that performs hot standby for the first controlled unit (main-system controlled unit, such as a BTM unit), it switches from the first controlled unit to the second controlled unit when a failure occurs in the first controlled unit. Alternatively, if a failure occurs in at least one module included in the first main control unit, only the fault module of the first main control unit is switched, and the non-fault modules of the first main control unit operate normally and will not be switched to corresponding modules in the second main control unit. When a failure occurs in part of the modules of the main control unit, the main control unit may be switched as a whole, or only the fault module in the main control unit may be switched, and switching may be completed without stopping the train, which does not affect operation efficiency and driving safety of the train.

It should be understood that the foregoing general description and the following detailed description are exemplary and illustrative only, and should not be construed as limiting the scope of the present disclosure.

### BRIEF DESCRIPTION OF THE DRAWINGS

The accompanying drawings attached are a part of the specification of the present disclosure, they illustrate exemplary embodiments of the present disclosure. The accompanying drawings together with the description of the specification are used to explain principles of the present disclosure.
FIG. 1 is a flowchart of a method of providing a hot standby for a main control unit according to a specific implementation of the present disclosure;
FIG. 2 is a flowchart of a method of providing a hot standby for a main control unit according to a specific implementation of the present disclosure;
FIG. 3 is a structural block diagram of an apparatus for providing a hot standby for a main control unit according to a specific implementation of the present disclosure;
FIG. 4 is a structural block diagram of an apparatus for providing a hot standby for a main control unit according to a specific implementation of the present disclosure;
FIG. 5 is a flowchart of a method of providing a hot standby for a main control unit according to a specific implementation of the present disclosure;
FIG. 6 is a flowchart of a method of providing a hot standby for a main control unit according to a specific implementation of the present disclosure;
FIG. 7 is a structural block diagram of an apparatus for providing a hot standby for a main control unit according to a specific implementation of the present disclosure; and
FIG. 8 is a structural block diagram of an apparatus for providing a hot standby for a main control unit according to a specific implementation of the present disclosure.

### DETAILED DESCRIPTION OF THE EMBODIMENTS

To make the objectives, technical solutions, and advantages of the embodiments of the present disclosure more clear and comprehensible, the spirits of the present disclosure will be clearly described below with reference to the drawings and the detailed descriptions. After learning the embodiments of the present disclosure, those skilled in the art can make changes and modifications based on techniques taught by the contents of the present disclosure, without departing from the spirits and scopes of the present disclosure.

In the embodiments of the present disclosure, the first main control unit may be a main-system main control unit or a standby-system main control unit; the second main control unit may be a main-system main control unit or a back-up system main control unit; that is, the first main control unit and the second main control unit are mutual standby for each other, wherein when the first main control unit is a main-system main control unit, the second main control unit is a standby-system main control unit; when the first main control is a standby-system main control unit, the second main control unit is a main-system main control unit. The first controlled unit may be a main-system controlled unit (e.g., a main-system BTM unit), or may be a standby-system controlled unit (e.g., a standby-system BTM unit); and the second controlled unit may be a main-system controlled unit. (e.g., a main-system BTM unit), or may be a standby system controlled unit (e.g., a standby-system BTM unit); that is, the first controlled unit and the second controlled unit are mutual standby for each other, wherein when the first controlled unit is a main-system controlled unit, the second controlled unit is a standby-system controlled unit; when the first controlled unit is a standby-system controlled unit, the second controlled unit is a main-system controlled unit. The first main control unit and the second main control unit each include a processing module, a communication module, a digital output/input module, a power source module, etc., but the present disclosure is not limited thereto.

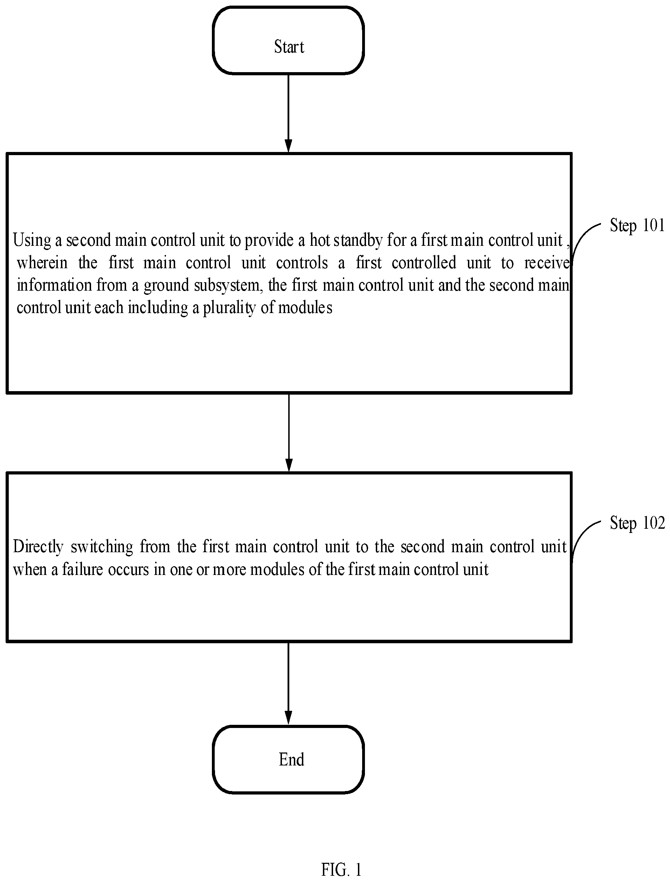

FIG. 1 is a flowchart of an embodiment of a method of providing a hot standby for a main control unit according to a specific implementation of the present disclosure, as shown in FIG. 1, a second main control unit performs hot standby for a first main control unit, if a failure occurs in one or more modules contained in the first main control unit, it directly switches from the first main control unit to the second main control unit, the second main control unit controls a first controlled unit to receive information from a ground subsystem.

In the specific implementation shown in this figure, the method of providing a hot standby for a main control unit comprises:
Step 101: using a second main control unit to provide a hot standby for a first main control unit , wherein the first main control unit controls a first controlled unit to receive information from a ground subsystem, the first main control unit and the second main control unit each including a plurality of modules. In a specific embodiment of the present disclosure, when none of the modules of the first main control unit has a failure, the first main control unit controls the first controlled unit to receive information from a ground subsystem.
Step 102: directly switching from the first main control unit to the second main control unit when a failure occurs in one or more modules of the first main control unit, that is, directly using the second main control unit to control the first controlled unit to receive information from the ground subsystem. In a specific embodiment of the present disclosure, after failure occurs in one or more modules of the first main control unit, it switches in entirety from the first main control unit to the second main control unit, the second main control unit controls the first controlled unit to receive information from the ground subsystem. The modules of each of the first main control unit and the second main control unit specifically include a processing module, a communication module, a digital output/input module, and a power source module, etc. For example, when a failure occurs in the processing module of the first main control unit, it switches in entirety from the first main control unit to the second main control unit, that is, even if no failure occurs the other modules of the first main control unit, these modules will not be used any more.

Referring to FIG. 1, the second main control unit provides a hot standby for the first main control unit, if a failure occurs in one or more modules of the first main control unit, it switches in entirety from the first main control unit to the second main control unit, the second main control unit controls the first controlled unit to receive information from the ground subsystem, it switches from the first main control unit to the second main control unit without stopping the train, which does not affect operation efficiency and running safety of the train.

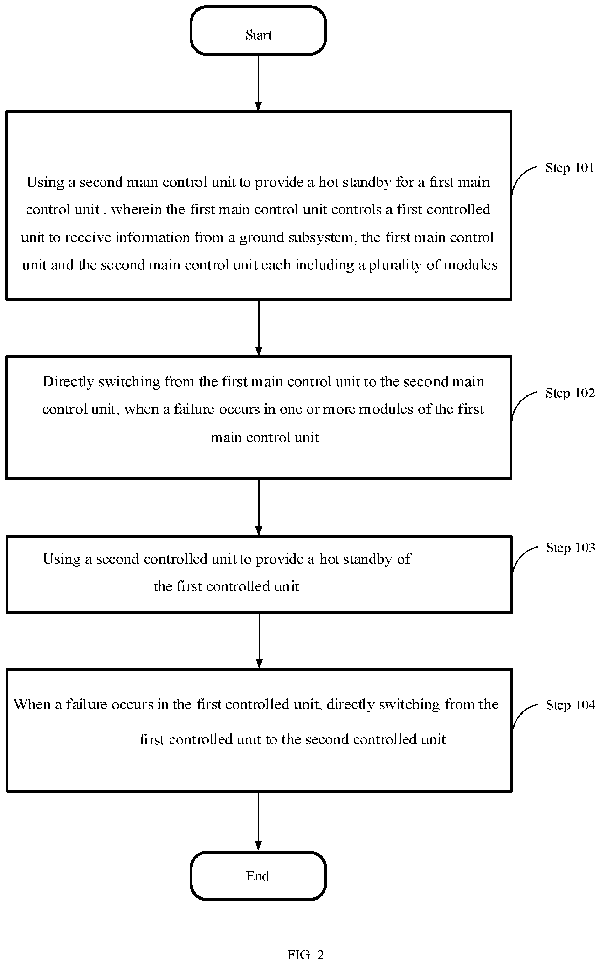

FIG. 2 is a flowchart of a method of providing a hot standby for a main control unit according to a specific implementation of the present disclosure, as shown in FIG. 2, after failure occurs in one or more modules of the first main control unit, if there is a second controlled unit that provides a hot standby for the first controlled unit, the second main control unit is used to directly control the second controlled unit to receive information from the ground subsystem.

In the specific implementation shown this figure, after step102, the method of providing a hot standby for a main control unit comprises:
Step 103: using a second controlled unit to provide a hot standby for the first controlled unit. In the present disclosure, after hot standby for the first controlled unit is provided by using the second controlled unit, the second main control unit communicates with the second controlled unit, that is, the second main control unit receives information only from the second controlled unit. The first controlled unit is a first BTM unit and the second controlled unit is a second BTM unit.
Step 104: when a failure occurs in the first controlled unit, directly switching from the first controlled unit to the second controlled unit. In the present disclosure, after failure occurs in the first controlled unit, the second main control unit controls the second controlled unit to receive information from the ground subsystem.

Referring to FIG. 2, the second controlled unit is used to provide a hot standby for the first controlled unit, after failure occurs in the first controlled unit, the second main control unit is used to directly control the second controlled unit to receive information from the ground subsystem, that is, it switches from the fault first controlled unit to the second controlled unit without stopping the train, which does not affect operation efficiency and running safety of the train.

The specific implementation of the present disclosure further provides a computer storage medium containing computer-executable instructions, wherein when the computer-executable instructions are processed by a data processing device, the data processing device performs the following steps:
Step 101: using a second main control unit to provide a hot standby for a first main control unit, wherein the first main control unit controls a first controlled unit to receive information from a ground subsystem, the first main control unit and the second main control unit each including a plurality of modules.
Step 102: directly switching from the first main control unit to the second main control unit when a failure occurs in one or more modules of the first main control unit.

The specific implementation of the present disclosure further provides a computer storage medium containing computer-executable instructions, wherein when the computer-executable instructions are processed by a data processing device, the data processing device performs the following steps:
Step 101: using a second main control unit to provide a hot standby for a first main control unit, wherein the first main control unit controls a first controlled unit to receive information from a ground subsystem, the first main control unit and the second main control unit each including a plurality of modules.
Step 102: directly switching from the first main control unit to the second main control unit when a failure occurs in one or more modules of the first main control unit.
Step 103: using a second controlled unit to provide a hot standby for the first controlled unit.
Step 104: directly switching from the first controlled unit to the second controlled unit when a failure occurs in the first controlled unit.

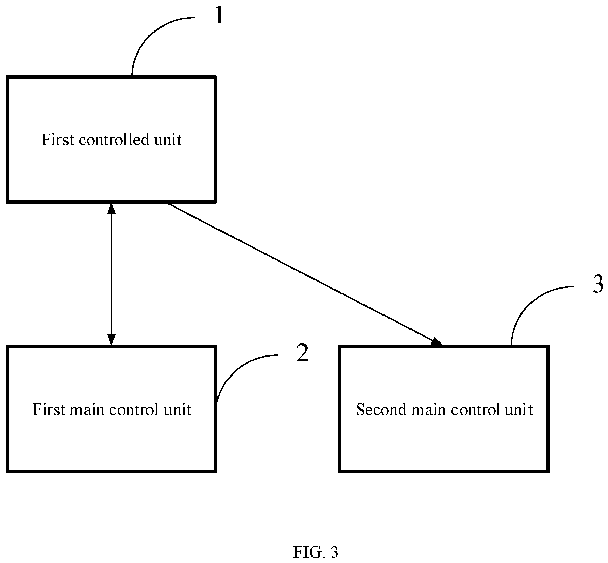

FIG. 3 is a structural block diagram an apparatus for providing a hot standby for a main control unit according to a specific implementation of the present disclosure. The apparatus shown in FIG. 3 may be applied to the method shown in FIGS. 1 and 2, the second main control unit provides a hot standby for the first main control unit, if a failure occurs in one or more modules of the first main control unit, it directly switches from the first main control unit to the second main control unit, the second main control unit controls the first controlled unit to receive information from the ground subsystem.

In the specific implementation shown in this figure, the apparatus for providing a hot standby for a main control unit comprises a first controlled unit 1, a first main control unit 2, and a second main control unit 3. The first main controlled unit 1 is configured to receive information from a ground subsystem; the first main control unit 2 is connected to the first controlled unit 1, and configured to control the first controlled unit 1 to receive information from the ground subsystem, the first main control unit 2 includes a plurality of modules; the second main control unit 3 is connected to the first controlled unit 1, and configured to control the first controlled unit 1 to receive information from the ground subsystem when a failure occurs in one or more modules of the first main control unit 2, and provide a hot standby for the first main control unit 2. In the present disclosure, the modules of each of the first main control unit 2 and the second main control unit 3 specifically include a processing module, a communication module, a digital output/input module, and a power source module, etc.

Referring to FIG.3, the second main control unit provides a hot standby for the first main control unit, if a failure occurs in one or more modules of the first main control unit, it switches in entirety from the first main control unit to the second main control unit, the second main control unit controls the first controlled unit to receive information from the ground subsystem, it switches from the first main control unit to the second main control unit without stopping the train, which does not affect operation efficiency and running safety of the train.

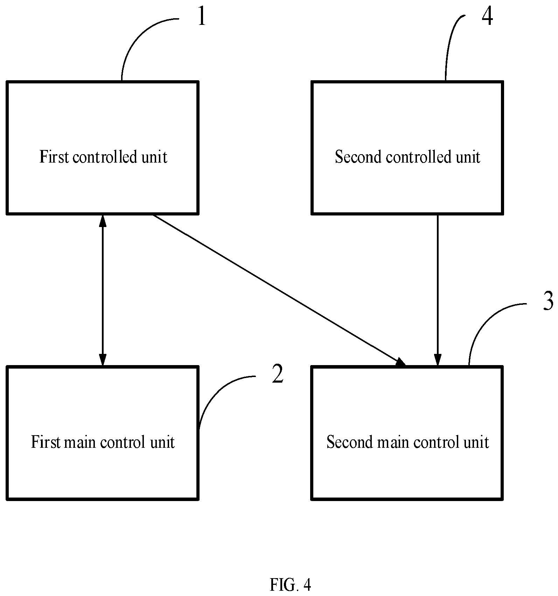

FIG. 4 is a structural block diagram of an embodiment of an apparatus for providing a hot standby for a main control unit according to a specific implementation of the present disclosure, as shown in FIG. 4, after failure occurs in one or more modules of the first main control unit, if there is a second controlled unit that provides a hot standby for the first controlled unit, in a case where failure occurs in the first controlled unit, the second main control unit is used to directly control the second controlled unit to receive information from the ground subsystem.

In the specific embodiment shown in this figure, the apparatus for providing a hot standby for a main control unit further comprises a second controlled unit 4. The second controlled unit 4 is connected to the second main control unit 3, and configured to be controlled by the second main control unit 3 to receive information from the ground subsystem when a failure occurs in the first controlled unit 1. In a specific embodiment of the present disclosure, the second controlled unit 4 is controlled by the second main control unit 3 to receive information from the ground subsystem, that is, the second main control unit 3 controls the second controlled unit 4 to receive information from the ground system. The first controlled unit 1 is a first BTM unit and the second controlled unit 4 is a second BTM unit.

Referring to FIG 4, the second controlled unit is used to provide a hot standby for the first controlled unit, after failure occurs in the first controlled unit, the second main control unit is used to directly control the second controlled unit to receive information from the ground subsystem, that is, it switches from the first controlled unit to the second controlled unit without stopping the train, which does not affect operation efficiency and running safety of the train.

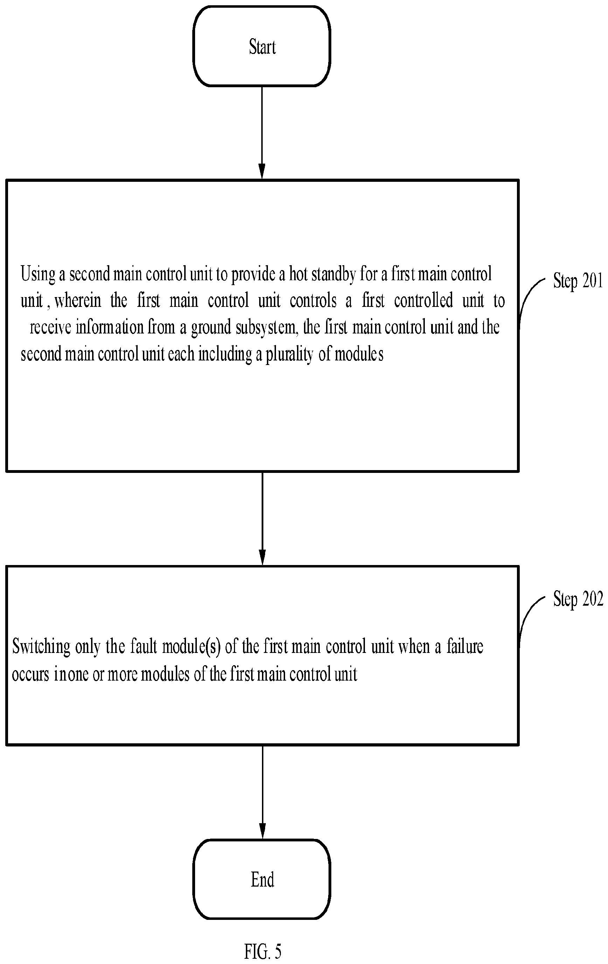

FIG. 5 is a flowchart of an embodiment of a method of providing a hot standby for a main control unit according to a specific implementation of the present disclosure, as shown in FIG. 5, the second main control unit provides a hot standby for the first main control unit, if a failure occurs in at least one module contained in the first main control unit, only the fault module of the first main control unit is switched, the non-fault modules of the first main control unit still operate normally.

In the specific implementation shown this figure, the method of providing a hot standby for the main control unit comprises:
Step 201: using a second main control unit to provide a hot standby for a first main control unit, wherein the first main control unit controls a first controlled unit to receive information from a ground subsystem, the first main control unit and the second main control unit each including a plurality of modules. In a specific embodiment of the present disclosure, a second main control unit provides a hot standby for the first main control unit. The first main control unit communicates with the first controlled unit. Modules of each of the first main control unit and the second main control unit include a processing module, a communication module, a digital output/input module, and a power source module, etc.
Step 202: switching only the fault module(s) of the first main control unit when a failure occurs in one or more modules of the first main control unit. In a specific embodiment of the present disclosure, when a failure occurs in one or more modules of the first main control unit, only the fault module of the first main control unit is switched, the remaining non-fault modules still maintain operating. For example, after failure occurs in the communication module of the first main control unit, the communication module of the second main control unit starts to operate, that is, the first main control unit uses the communication module of the second main control unit to continue operating, rather than switching from the first main control unit to the second main control unit in entirety.

Referring to FIG. 5, the second main control unit provides a hot standby for the first main control unit, if a failure occurs in one or more modules of the first main control unit, only the fault module of the first main control unit is switched, there is no need to stop the train, the non-fault modules of the first main control unit continue to operate, the fault module of first main control unit is replaced by the corresponding module in the second main control unit, rather than switching from the first main control unit to the second main control unit in entirety, which will not affect normal operating of the train, operation efficiency of the train is high and driving safety is high.

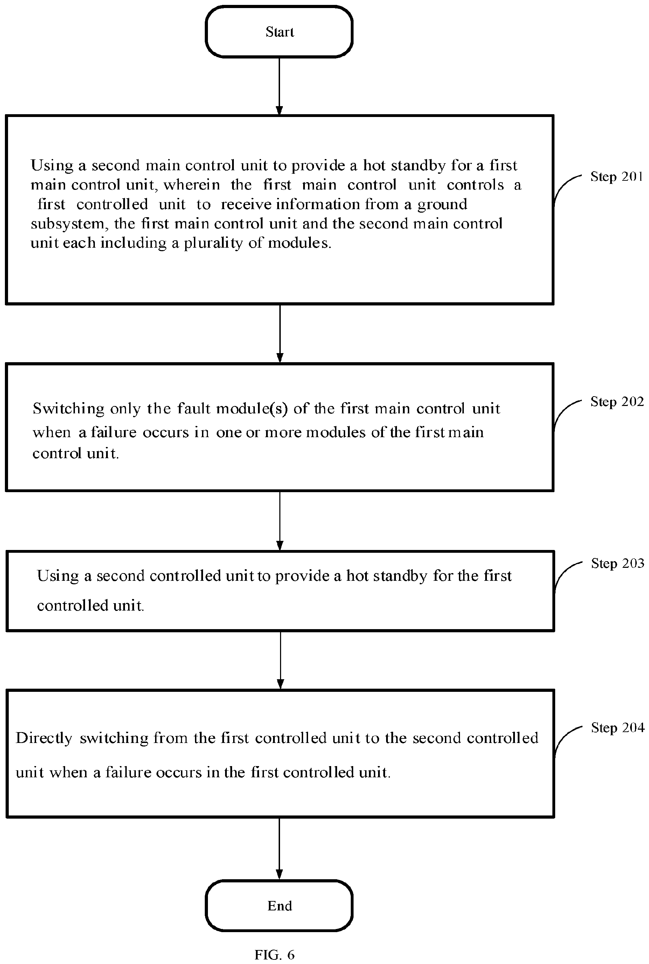

FIG. 6 is a flowchart of a method of providing a hot standby for a main control unit according to a specific implementation of the present disclosure, as shown in FIG. 6, if there is a second controlled unit that provides a hot standby for the first controlled unit, if a failure occurs in the first controlled unit, it directly switches from the first controlled unit to the second controlled unit.

In this figure, the method of providing a hot standby for a main control unit further comprises:
Step 203: using a second controlled unit to provide a hot standby for the first controlled unit . In a specific embodiment of the present disclosure, after the second controlled unit is used to provide a hot standby for the first controlled unit, the second main control unit communicates with the second controlled unit, that is, the second main control unit receives information only from the second controlled unit. The first controlled unit is a first BTM unit and the second controlled unit is a second BTM unit.
Step 204: directly switching from the first controlled unit to the second controlled unit when a failure occurs in the first controlled unit. In the present disclosure, after failure occurs in the first controlled unit, the second main control unit controls the second controlled unit to receive information from the ground subsystem.

Referring to FIG. 6, the second controlled unit is used to provide a hot standby for the first controlled unit, after failure occurs in the first controlled unit, the second main control unit is used to directly control the second controlled unit to receive information from the ground subsystem, that is, it switches from the fault first controlled unit to the second controlled unit without stopping the train, which improves operation efficiency of the train and ensures running safety of the train.

The specific implementation of the present disclosure further provides a computer storage medium containing computer-executable instructions, wherein when the computer-executable instructions are processed by a data processing device, the data processing device performs the following steps:
Step 201: using a second main control unit to provide a hot standby for a first main control unit , wherein the first main control unit controls a first controlled unit to receive information from a ground subsystem, the first main control unit and the second main control unit each including a plurality of modules.
Step 202: switching only the fault module(s) of the first main control unit when a failure occurs in one or more modules of the first main control unit.

The specific implementation of the present disclosure further provides a computer storage medium containing computer-executable instructions, wherein when the computer-executable instructions are processed by a data processing device, the data processing device performs the following steps:
Step 201: using a second main control unit to provide a hot standby for a first main control unit, wherein the first main control unit controls a first controlled unit to receive information from a ground subsystem, the first main control unit and the second main control unit each including a plurality of modules.
Step 202: switching only the fault module(s) of the first main control unit when a failure occurs in one or more modules of the first main control unit.
Step 203: using a second controlled unit to provide a hot standby for the first controlled unit.
Step 204: directly switching from the first controlled unit to the second controlled unit when a failure occurs in the first controlled unit.

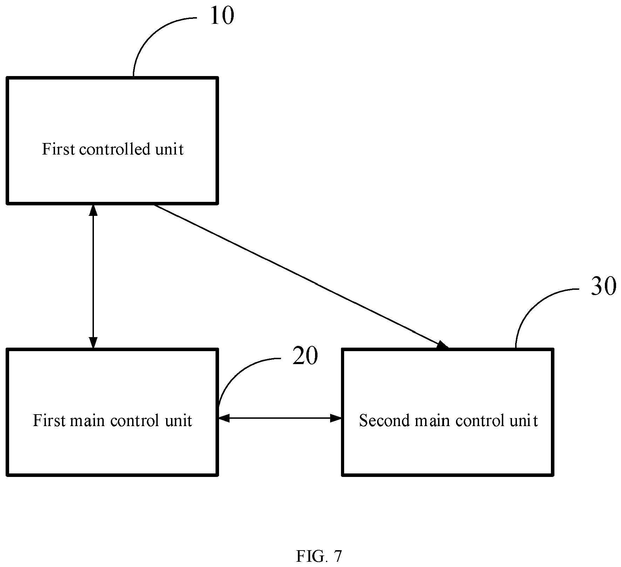

FIG. 7 is a structural block diagram of an of an apparatus for providing a hot standby for a main control unit according to a specific implementation of the present disclosure, as shown in FIG. 7, the second main control unit provides a hot standby for the first main control unit, if a failure occurs in at least one module included in the first main control unit, only the fault module is switched, the non-fault modules of the first main control unit still maintain normal operating.

In the specific implementation shown in this figure, the apparatus for providing a hot standby for the main control unit comprises: a first controlled unit 10, a first main control unit 20, and a second main control unit 30. The first controlled unit 10 is configured to receive information from a ground subsystem; the first main control unit 20 is connected to the first controlled unit 10, and configured to control the first controlled unit 10 to receive information from the ground subsystem, the first main control unit 20 includes a plurality of modules; and the second main control unit 30 is connected to the first controlled unit 10, and configured to switch only the fault module of the first main control unit 20 when a failure occurs in one or more modules of the first main control unit 20.

Referring to FIG. 7, the second main control unit provides a hot standby for the first main control unit, if a failure occurs in one or more modules of the first main control unit, only the fault module of the first main control unit is switched, there is no need to stop the train, the non-fault modules of the first main control unit continue to operate, the fault module of the first main control unit is replaced by the corresponding module in the second main control unit, rather than switching from the first main control unit to the second main control unit in entirety, which will not affect normal operating of the train, operation efficiency of the train is high and driving safety is high.

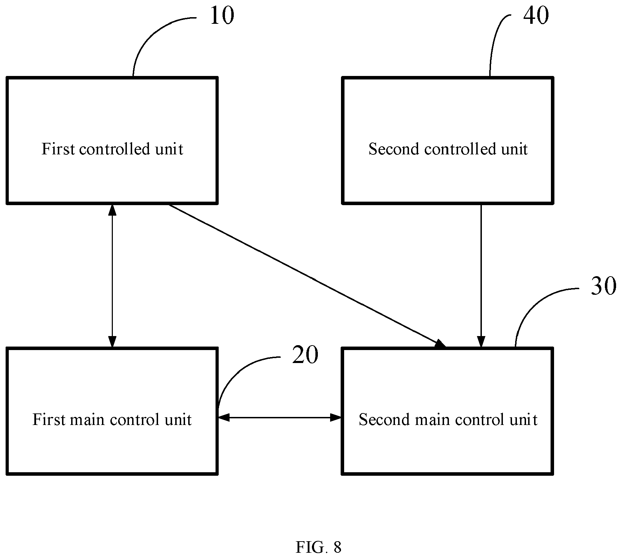

FIG. 8 is a structural block diagram of an apparatus for providing a hot standby for a main control unit according to a specific implementation of the present disclosure, as shown in FIG. 8, if there is a second controlled unit that provides a hot standby for the first controlled unit, when a failure occurs in the first controlled unit, it directly switches from the first controlled unit to the second controlled unit.

In the specific implementation shown this figure, the apparatus for providing a hot standby for a main control unit further comprises: a second controlled unit 40. The second controlled unit 40 is connected to the second main control unit 30, and configured to provide a hot standby for the first controlled unit 10. In the present disclosure, after a failure occurs in the first controlled unit, the second main control unit controls the second controlled unit to receive information from the ground subsystem. The first controlled unit 10 is a first BTM unit and the second controlled unit 40 is a second BTM unit.

Referring to FIG. 8, the second controlled unit is used to provide a hot standby for the first controlled unit, after failure occurs in the first controlled unit, the second main control unit is used to directly control the second controlled unit to receive information from the ground subsystem, that is, it switches from the fault first controlled unit to the second controlled unit without stopping the train, which improves operation efficiency of the train and ensures running safety of the train.

The embodiments of the present disclosure further provide a method and apparatus of providing a hot standby for a main control unit and the computer storage medium: the second main control unit (standby-system main control board) provides a hot standby for the first main control unit (main-system main control board); the first main control unit (main-system main control board) controls the first controlled unit (main-system controlled unit) to receive information from the ground subsystem, if a failure occurs in at least one module included in the first main control unit (e.g., the processing module, the communication module, the digital output input module, and the power source module, etc.), it switches in entirety from the first main control unit to the second main control unit, that is, the second main control unit controls the first controlled unit to receive information from the ground subsystem; if there is a second controlled unit (standby-system controlled unit, e.g., a BTM unit) that provides a hot standby for the first controlled unit (main-system controlled unit, such as a BTM unit), it switches from the first controlled unit to the second controlled unit when a failure occurs in the first controlled unit. Alternatively, if a failure occurs in at least one module included in the first main control unit, only the fault module of the first main control unit is switched, and the non-fault modules of the first main control unit operate normally and will not be switched to corresponding modules in the second main control unit. When a failure occurs in part of the modules of the main control unit, the main control unit may be switched in entirety, or only the fault module of the main control unit may be switched, and switching may be completed without stopping the train, which does not affect operation efficiency and driving safety of the train.

It should be noted that the units specified in the present disclosure may be independent devices, and may also be board cards or software/ hardware modules and so on. Meanwhile, the above-described embodiments of the present disclosure may be implemented in various hardware, software codes, or a combination thereof. For example, the embodiments of the present disclosure may also be program codes for executing the above method in a Digital Signal Processor (DSP). The present disclosure may also relate to a variety of functions performed by a computer processor, a digital signal processor, a microprocessor, or a Field Programmable Gate Array (FPGA). The above-mentioned processor may be configured to perform specific tasks in accordance with the present disclosure, which is implemented by executing machine-readable software codes or firmware codes that define a particular method disclosed by the present disclosure. Software codes or firmware codes may be developed into different programming languages and different formats or forms. Software codes may also be complied for different target platforms. However, different code patterns, types, and languages of software codes and other types of configuration code that perform tasks in accordance with the present disclosure do not depart from the scopes of the present disclosure.

## Claims

1. A method of providing a hot standby for a main control unit, the method comprising:
using a second main control unit (3) to provide a hot standby for a first main control unit (2), wherein the first main control unit (2) controls a first controlled unit (1) to receive information from a ground subsystem, the first main control unit (2) and the second main control unit (3) each including a plurality of modules, wherein the second main control unit (3) is connected to the first controlled unit (1), and configured to control the first controlled unit (1) to receive information from the ground subsystem when a failure occurs in one or more modules of the first main control unit (2), and provide a hot standby for the first main control unit (2); and
directly switching from the first main control unit (2) to the second main control unit (3) when a failure occurs in one or more modules of the first main control unit (2);
after the step of directly switching from the first main control unit (2) to the second main control unit (3), using a second controlled unit (4) to provide a hot standby for the first controlled unit (1), and when a failure occurs in the first controlled unit (1), directly switching from the first controlled unit (1) to the second controlled unit (4);
after hot standby for the first controlled unit (1) is performed by using the second controlled unit (4), the second main control unit (3) communicates with the second controlled unit (4);
wherein the first controlled unit (1) is a first Balise Transmission Module BTM unit and the second controlled unit (4) is a second Balise Transmission Module BTM unit.

2. The method of providing a hot standby for a main control unit according to claim 1, wherein the modules of each of the first main control unit (2) and the second main control unit (3) specifically include a processing module, a communication module, a digital output/input module, and a power source module.

3. A computer storage medium containing computer-executable instructions, wherein when the computer-executable instructions are processed by a data processing device, the data processing device executes steps of the method of providing a hot standby for a main control unit according to any one of claims 1 to 2.

4. An apparatus for providing a hot standby for a main control unit, the apparatus comprising a first controlled unit (1), a first main control unit (2), a second main control unit (3), and a second controlled unit (4), wherein the apparatus is so configured as to execute the method of claim 1.

5. The apparatus for providing a hot standby for a main control unit according to claim 4, wherein the modules of each of the first main control unit (2) and the second main control unit (3) specifically include a processing module, a communication module, a digital output/input module, and a power source module.

6. A method of providing a hot standby for a main control unit (20), the method comprising:
using a second main control unit (30) to provide a hot standby for a first main control unit (20), wherein the first main control unit (20) controls a first controlled unit (10) to receive information from a ground subsystem, the first main control unit (20) and the second main control unit (30) each including a plurality of modules, wherein the second main control unit (30) is connected to the first controlled unit (10), and configured to switch only the fault module of the first main control unit (20) when a failure occurs in one or more modules of the first main control unit (20); and
when a failure occurs in one or more modules of the first main control unit (20), switching only faulty module(s) of the first main control unit (20), and the remaining non-fault modules of the first main control unit (20) still maintain operating;
after the step of switching only faulty module(s) of the first main control unit (20), using a second controlled unit (40) to provide a hot standby for the first controlled unit (10), and when a failure occurs in the first controlled unit (1), directly switching from the first controlled unit (1) to the second controlled unit (4);
wherein the first controlled unit is a first Balise Transmission Module BTM unit and the second controlled unit is a second Balise Transmission Module BTM unit.

7. The method of providing a hot standby for a main control unit according to claim 6, wherein the modules of each of the first main control unit (20) and the second main control unit (30) specifically include a processing module, a communication module, a digital output/input module, and a power source module.

8. A computer storage medium containing computer-executable instructions, wherein when the computer-executable instructions are processed by a data processing device, the data processing device performs steps of the method of providing a hot standby for a main control unit according to any one of claims 6 to 7.

9. An apparatus for providing a hot standby for a main control unit, the apparatus comprising a first controlled unit (10), a first main control unit (20), a second main control unit (30), and a second controlled unit (40), wherein the apparatus is so configured as to execute the method of claim 6.

10. The apparatus for providing a hot standby for a main control unit according to claim 9, wherein the modules of each of the first main control unit and the second main control unit specifically include a processing module, a communication module, a digital output/input module, and a power source module.

## Patentansprüche

1. Verfahren zur Bereitstellung eines Hot-Standby für eine Hauptsteuereinheit, wobei das Verfahren die Schritte aufweist:
Verwendung einer zweiten Hauptsteuereinheit (3) zur Bereitstellung eines Hot-Standby für eine erste Hauptsteuereinheit (2), wobei die erste Hauptsteuereinheit (2) eine erste gesteuerte Einheit (1) steuert, um Informationen von einem Boden-Teilsystem zu erhalten, wobei die erste Hauptsteuereinheit (2) und die zweite Hauptsteuereinheit (3) jeweils eine Vielzahl von Modulen aufweisen, wobei die zweite Hauptsteuereinheit (3) mit der ersten gesteuerten Einheit (1) verbunden und dafür ausgebildet ist, die erste gesteuerte Einheit (1) zu steuern, um Informationen von dem Boden-Teilsystem zu erhalten, wenn ein Fehler in einem oder mehreren Modulen der ersten Hauptsteuereinheit (2) auftritt, und um einen Hot-Standby für die erste Hauptsteuereinheit (2) bereitzustellen; und
direktes Umschalten von der ersten Hauptsteuereinheit (2) zu der zweiten Hauptsteuereinheit (3), wenn ein Fehler in einem oder mehreren Modulen der ersten Hauptsteuereinheit (2) auftritt;
nach dem Schritt des direkten Umschaltens von der ersten Hauptsteuereinheit (2) zu der zweiten Hauptsteuereinheit (3), Bereitstellen eines Hot-Standby für die erste gesteuerte Einheit (1), und wenn ein Fehler in der ersten gesteuerten Einheit (1) auftritt, direkt Umschalten von der ersten gesteuerten Einheit (1) zu der zweiten gesteuerten Einheit (4);
nachdem ein Hot-Standby für die erste gesteuerte Einheit unter Verwendung der zweiten gesteuerten Einheit (4) ausgeführt wurde, kommuniziert die zweite Hauptsteuereinheit (3) mit der zweiten gesteuerten Einheit (4),
wobei die erste gesteuerte Einheit (1) eine erste Balisen-Übertragungsmodul-Einheit BTM und die zweiten gesteuerte Einheit (4) eine zweite Balisen-Übertragungsmodul-Einheit ist.

2. Verfahren zur Bereitstellung eines Hot-Standby für eine Hauptsteuereinheit gemäß Anspruch 1, wobei die Module jeder der ersten Hauptsteuereinheit (2) und der zweiten Hauptsteuereinheit (3) insbesondere ein Verarbeitungsmodul, ein Kommunikationsmodul, ein digitales Ausgabe-/Eingabemodul und ein Energiequellenmodul aufweisen.

3. Computerspeichermedium, das über den Computer ausführbare Anweisungen enthält, wobei, wenn die über den Computer ausführbaren Anweisungen von einer Datenverarbeitungsvorrichtung verarbeitet werden, die Datenverarbeitungsvorrichtung Schritte des Verfahrens zur Bereitstellung eines Hot-Standby für eine Hauptsteuereinheit gemäß einem der Ansprüche 1 bis 2 ausführt.

4. Vorrichtung zur Bereitstellung eines Hot-Standby für eine Hauptsteuereinheit, wobei die Vorrichtung eine erste gesteuerte Einheit (1), eine erste Hauptsteuereinheit (2), eine zweite Hauptsteuereinheit (3) und eine zweite gesteuerte Einheit (4) aufweist, wobei die Vorrichtung dafür ausgebildet ist, das Verfahren gemäß Anspruch 1 durchzuführen.

5. Vorrichtung zur Bereitstellung eines Hot-Standby für eine Hauptsteuereinheit gemäß Anspruch 4, wobei die Module jeder der ersten Hauptsteuereinheit (2) und der zweiten Hauptsteuereinheit (3) insbesondere ein Verarbeitungsmodul, ein Kommunikationsmodul, ein digitales Ausgabe-/Eingabemodul und ein Energiequellenmodul aufweisen.

6. Verfahren zur Bereitstellung eines Hot-Standby für eine Hauptsteuereinheit (20), wobei das Verfahren die Schritte aufweist:
Verwendung einer zweiten Hauptsteuereinheit (30) zur Bereitstellung eines Hot-Standby für eine erste Hauptsteuereinheit (20), wobei die erste Hauptsteuereinheit (20) eine erste gesteuerte Einheit (10) steuert, um Informationen von einem Boden-Teilsystem zu erhalten, wobei die erste Hauptsteuereinheit (20) und die zweite Hauptsteuereinheit (30) jeweils eine Vielzahl von Modulen aufweisen, wobei die zweite Hauptsteuereinheit (30) mit der ersten gesteuerten Einheit (10) verbunden und dafür ausgebildet ist, nur das gestörte Modul der ersten Hauptsteuereinheit (20) umzuschalten, wenn ein Fehler in einem oder mehreren Modulen der ersten Hauptsteuereinheit (20) auftritt; und
wenn ein Fehler in einem oder mehreren Modulen der ersten Hauptsteuereinheit (20) auftritt, Umschalten nur des/der gestörten Moduls/Module der ersten Hauptsteuereinheit (20) und Aufrechterhalten des Betriebs der restlichen nicht gestörten Module der ersten Hauptsteuereinheit (20);
nach dem Schritt des Umschaltens nur des/der gestörten Moduls/Module der ersten Hauptsteuereinheit (20), Verwendung einer zweiten gesteuerten Einheit (40) zur Bereitstellung eines Hot-Standby für die erste gesteuerte Einheit (10), und wenn ein Fehler in der ersten gesteuerten Einheit (1) auftritt, direktes Umschalten von der ersten gesteuerten Einheit (1) zu der zweiten gesteuerten Einheit (4);
wobei die erste gesteuerte Einheit eine erste Balisen-Übertragungsmodul-Einheit BTM und die zweiten gesteuerte Einheit (4) eine zweite Balisen-Übertragungsmodul-Einheit BTM ist.

7. Verfahren zur Bereitstellung eines Hot-Standby für eine Hauptsteuereinheit gemäß Anspruch 6, wobei die Module jeweils der ersten Hauptsteuereinheit (20) und der zweiten Hauptsteuereinheit (30) insbesondere ein Verarbeitungsmodul, ein Kommunikationsmodul, ein digitales Ausgabe-/Eingabemodul und ein Energiequellenmodul aufweisen.

8. Computerspeichermedium, das über den Computer ausführbare Anweisungen enthält, wobei, wenn die über den Computer ausführbaren Anweisungen von einer Datenverarbeitungsvorrichtung verarbeitet werden, die Datenverarbeitungsvorrichtung Schritte des Verfahrens zur Bereitstellung eines Hot-Standby für eine Hauptsteuereinheit gemäß einem der Ansprüche 6 bis 7 ausführt.

9. Vorrichtung zur Bereitstellung eines Hot-Standby für eine Hauptsteuereinheit, wobei die Vorrichtung eine erste gesteuerte Einheit (10), eine erste Hauptsteuereinheit (20), eine zweite Hauptsteuereinheit (30) und eine zweite gesteuerte Einheit (40) aufweist, wobei die Vorrichtung dafür ausgebildet ist, das Verfahren gemäß Anspruch 6 durchzuführen.

10. Vorrichtung zur Bereitstellung eines Hot-Standby für eine Hauptsteuereinheit gemäß Anspruch 9, wobei die Module jeder der ersten Hauptsteuereinheit und der zweiten Hauptsteuereinheit insbesondere ein Verarbeitungsmodul, ein Kommunikationsmodul, ein digitales Ausgabe-/Eingabemodul und ein Energiequellenmodul aufweisen.

## Revendications

1. Procédé de fournir une veille à chaud (hot standby) pour une unité de commande principale, le procédé comprenant les étapes de :
utiliser une deuxième unité de commande principale (3) pour fournir une veille à chaud pour une première unité de commande principale (2), dans lequel la première unité de commande principale (2) commande une première unité commandée (1) pour recevoir des informations d'un sous-système sol, la première unité de commande principale (2) et la deuxième unité de commande principale (3) comprenant chacune une pluralité de modules, dans lequel la deuxième unité de commande principale (3) est reliée à la première unité commandée (1) et est configurée pour commander la première unité commandée pour recevoir des informations du sous-système sol, si une défaillance se produit dans un ou plusieurs module(s) de la première unité de commande principale (2), et pour fournir une veille à chaud pour la première unité de commande principale (2) ; et
directement commuter de la première unité de commande principale (2) à la deuxième unité de commande principale (3), si une défaillance se produit dans un ou plusieurs module(s) de la première unité de commande principale (2) ;
après l'étape de directement commuter de la première unité de commande principale (2) à la deuxième unité de commande principale (3), utiliser une deuxième unité commandée (4) pour fournir une veille à chaud pour la première unité commandée (1), et si une défaillance se produit dand la première unité commandée (1) directement commuter de la première unité commandée (1) à la deuxième unité commandée (4),
après que la veille à chaud ait été établie pour la première unité commandée (1) en utilisant la deuxième unité commandée (4), la deuxième unité de commande principale (3) communique avec la deuxième unité commandée (4) ;
dans lequel la première unité commandée (1) est une première unité de Module de Transmission Balise BTM et la deuxième unité commandée (4) est une deuxième unité de Module de Transmission Balise BTM.

2. Procédé de fournir une veille à chaud pour une unité de commande principale selon la revendication 1, dans lequel les modules de chacune de la première unité de commande principale (2) et de la deuxième unité de commande principale (3) comprennent notamment un module de traitement, un module de communication, un module de sortie/d'entrée numérique et un module de source d'énergie.

3. Moyen de stockage informatique contenant des instructions à exécuter par un ordinateur, dans lequel si les instructions à exécuter par un ordinateur sont traitées par un dispositif de traitement de données, le dispositif de traitement de données effectue les étapes du procédé de fournir une veille à chaud pour une unité de commande principale selon l'une quelconque des revendications 1 à 2.

4. Dispositif destiné à fournir une veille à chaud pour une unité de commande principale, le dispositif comprenant une première unité commandée (1), une première unité de commande principale (2), une deuxième unité de commande principale (3) et une deuxième unité commandée (4), dans lequel le dispositif est configuré pour exécuter le procédé selon la revendication 1.

5. Dispositif destiné à fournir une veille à chaud pour une unité de commande principale selon la revendication 4, dans lequel les modules de chacune de la première unité de commande principale (2) et de la deuxième unité de commande principale (3) comprennent notamment un module de traitement, un module de communication, un module de sortie/d'entrée numérique et un module de source d'énergie.

6. Procédé de fournir une veille à chaud pour une unité de commande principale (20), le procédé comprenant les étapes de :
utiliser une deuxième unité de commande principale (30) pour fournir une veille à chaud pour une première unité de commande principale (20), dans lequel la première unité de commande principale (20) commande une première unité commandée (10) pour recevoir des informations d'un sous-système sol, la première unité de commande principale (20) et la deuxième unité de commande principale (30) comprenant chacune une pluralité de modules, dans lequel la deuxième unité de commande principale (30) est reliée à la première unité commandée (10) et est configurée pour ne commuter que le module de défaillance de la première unité de commande principale (20), si une défaillance se produit dans un ou plusieurs module(s) de la première unité de commande principale (20) ; et
si une défaillance se produit dans un ou plusieurs module(s) de la première unité de commande principale (20), ne commuter que le/les module(s) de défaillance de la première unité de commande principale (20), et encore maintenir les modules, qui n'ont pas de défaillance, en fonctionnement ;
après l'étape de ne commuter que le/les module(s) de défaillance de la première unité de commande principale (20), utiliser une deuxième unité commandée (40) pour fournir une veille à chaud pour la première unité commandée (10), et si une défaillance se produit dans la première unité commandée (1), directement commuter de la première unité commandée (1) à la deuxième unité commandée (4) ;
dans lequel la première unité commandée est une première unité de Module de Transmission Balise BTM et la deuxième unité commandée est une deuxième unité de Module de Transmission Balise BTM.

7. Procédé de fournir une veille à chaud pour une unité de commande principale selon la revendication 6, dans lequel les modules de chacune de la première unité de commande principale (20) et de la deuxième unité de commande principale (30) comprennent notamment un module de traitement, un module de communication, un module de sortie/d'entrée numérique et un module de source d'énergie.

8. Moyen de stockage informatique contenant des instructions à exécuter par un ordinateur, dans lequel si les instructions à exécuter par un ordinateur sont traitées par un dispositif de traitement de données, le dispositif de traitement de données effectue les étapes du procédé de fournir une veille à chaud pour une unité de commande principale selon l'une quelconque des revendications 6 à 7.

9. Dispositif destiné à fournir une veille à chaud pour une unité de commande principale, le dispositif comprenant une première unité commandée (10), une première unité de commande principale (20), une deuxième unité de commande principale (3ß) et une deuxième unité commandée (40), dans lequel le dispositif est configuré pour exécuter le procédé selon la revendication 6.

10. Dispositif destiné à fournir une veille à chaud pour une unité de commande principale selon la revendication 9, dans lequel les modules de chacune de la première unité de commande principale et de la deuxième unité de commande principale comprennent notamment un module de traitement, un module de communication, un module de sortie/d'entrée numérique et un module de source d'énergie.
